# EUROPÄISCHE PATENTANMELDUNG

(11) **EP 2 740 875 A1**
(43) Veröffentlichungstag der Anmeldung: **11.06.2014**
(21) Anmeldenummer: 12196168.4
(22) Anmeldetag: 07.12.2012
(51) Int. Cl.: E05F 15/18, H02K 41/00

(54) **Elektromagnetischer Türantrieb**

(71) Anmelder: Pollmeier, Holger, 33415 Verl (DE); Reimann, Manfred, 33758 Schloss Holte-Stukenbrock (DE)
(72) Erfinder: Pollmeier, Holger, 33415 Verl (DE); Reimann, Manfred, 33758 Schloss Holte-Stukenbrock (DE)
(74) Vertreter: Ter Meer Steinmeister & Partner

(57) **Zusammenfassung**

Elektromagnetischer Türantrieb mit mindestens einem Paar aus einer stationären Antriebseinheit (20, 22) und einer türfesten Antriebseinheit (24, 26), die dazu eingerichtet sind, miteinender in magnetische Wechselwirkung zu treten, wobei mindestens eine dieser Antriebseinheiten mindestens einen Elektromagneten (28) aufweist, dadurch gekennzeichnet, dass die Antriebseinheiten (20, 22, 24, 26) derart angeordnet sind, dass sie nur dann innerhalb der Reichweite ihrer gegenseitigen magnetischen Wechselwirkung liegen, wenn sich die Tür (10) im Bereich eines Endes ihres Bewegungsspiels befindet, dass die Tür derart gelagert ist, dass sie antriebslos über zumindest einen Teil ihres Bewegungsspiels bewegbar ist, und dass eine Steuereinheit (30) für den Elektromagneten dazu ausgebildet ist, der Tür (10) durch die magnetische Wechselwirkung einen Kraftstoß zu erteilen.

## Beschreibung

Die Erfindung betrifft einen elektromagnetischen Türantrieb mit mindestens einem Paar aus einer stationären Antriebseinheit und einer türfesten Antriebseinheit, die dazu eingerichtet sind, miteinender in magnetische Wechselwirkung zu treten, wobei mindestens eine dieser Antriebseinheiten mindestens einen Elektromagneten aufweist.

Sowohl für Schwenktüren als auch für Schiebetüren sind elektromagnetische Antriebe bekannt, beispielsweise in der Form eines Elektromotors mit Getriebe oder - für Schiebetüren - auch in der Form eines Linearmotors. Die bekannten Türantriebe erfordern einen relativ hohen Installationsaufwand, da die Tür auf ihrem gesamten Bewegungsbereich mit dem Antrieb in Verbindung stehen muss. Zumeist werden außerdem Schutzeinrichtungen benötigt, die die Schließkraft der Tür so begrenzen, dass Quetschverletzungen vermieden werden.

Aufgabe der Erfindung ist es, einen Türantrieb zu schaffen, der sich einfach installieren und sicher betreiben lässt.

Diese Aufgabe wird erfindungsgemäß dadurch gelöst, dass die Antriebseinheiten derart angeordnet sind, dass sie nur dann innerhalb der Reichweite ihrer gegenseitigen magnetischen Wechselwirkung liegen, wenn sich die Tür im Bereich eines Endes ihres Bewegungsspiels befindet, dass die Tür derart gelagert ist, dass sie antriebslos über zumindest einen Teil ihres Bewegungsspiels bewegbar ist, und dass eine Steuereinheit für den Elektromagneten dazu ausgebildet ist, der Tür durch die magnetische Wechselwirkung einen Kraftstoß zu erteilen.

Bei dem erfindungsgemäßen Antrieb erhält die Tür, wenn sie sich in einer Endlage befindet, einen Kraftstoß, der bewirkt, dass sich die Tür aufgrund ihrer Trägheit antriebslos in die entgegengesetzte Endlage bewegt. Der Kraftstoß lässt sich dabei so an die Masse der Tür und den Roll- oder Lagerwiderstand anpassen, dass die Tür die entgegengesetzte Endlage erreicht, jedoch nur mit mäßiger Geschwindigkeit, so dass Verletzungen vermieden werden und kein heftiger Aufprall stattfindet. Wahlweise kann der erfindungsgemäße Antrieb auch als Dämpfer verwendet werden, der den Aufprall der Tür bei Erreichen der Endlage dämpft und/oder die Tür aktiv in die Endlage zieht. Sofern Antriebe für beide Endlagen vorgesehen sind, können diese wechselweise als Antrieb und als Dämpfer bzw. Einzug arbeiten.

Vorteilhafte Ausgestaltungen der Erfindung sind in den Unteransprüchen angegeben.

Vorzugsweise wird eine der beiden Magneteinheiten, vorzugsweise die türfeste Magneteinheit, durch einen Permanentmagneten gebildet. Der Permanentmagnet kann beispielsweise aus einer ferromagnetischen Legierung bestehen, die seltene Erden wie z. B. Neodym enthält und eine hohe Remanenz aufweist, so dass der Magnet trotz kleiner Abmessungen in der Lage ist, ein starkes Magnetfeld zu erzeugen.

Wenn sich die Antriebseinheiten einander nähern, so ändert sich positionsabhängig die Induktivität der Spule des Elektromagneten. Die Messung dieser Induktivität oder wahlweise auch die Messung einer induzierten Spannung ermöglicht eine Bestimmung oder zumindest Abschätzung der Position der Tür. Wenn der Antrieb als Dämpfer oder Einzug betrieben wird, kann diese Positionsinformation zur Aktivierung und Steuerung des oder der Elektromagneten genutzt werden.

In einer bevorzugten Ausführungsform weist die Antriebseinheit eine Kaskade aus mehreren Elektromagneten auf, die in Bewegungsrichtung der Tür hintereinander angeordnet sind und sukzessive aktiviert und deaktiviert werden können, um mit verhältnismäßig geringer Stromstärke auf kurzer Beschleunigungsstrecke einen ausreichend hohen Kraftstoß zu erzeugen.

Im folgenden werden Ausführungsbeispiele anhand der Zeichnung näher erläutert.

Es zeigen:
- Fig. 1: eine schematische Ansicht einer Schiebetür mit einem erfindungsgemäßen Antrieb;
- Fig. 2: einen Längsschnitt zweier magnetisch wechselwirkender Antriebseinheiten;
- Fig. 3: einen Schnitt längs der Linie III-III in Fig. 2;
- Fig. 4: ein Schaltbild einer Antriebseinheit und einer zugehörigen Steuereinheit gemäß einem Ausführungsbeispiel;
- Fig. 5: ein Zeitdiagramm zur Erläuterung der Funktionsweise der Antriebseinheit in einer Betriebsart als Dämpfer;
- Fig. 6 - 8: die Antriebseinheiten und nach Fig. 2 in unterschiedlichen Betriebsstadien;
- Fig. 9: ein Schaltbild für eine Antriebseinheit und eine Steuereinheit gemäß einem anderen Ausführungsbeispiel;
- Fig. 10: ein Schaltbild eines Teils einer Steuereinheit gemäß einem anderen Ausführungsbeispiel;
- Fig. 11: ein Zeitdiagramm zu dem Ausführungsbeispiel nach Fig. 10; und
- Fig. 12 - 14: Längsschnitte von Antriebseinheiten gemäß weiteren Ausführungsbeispielen.

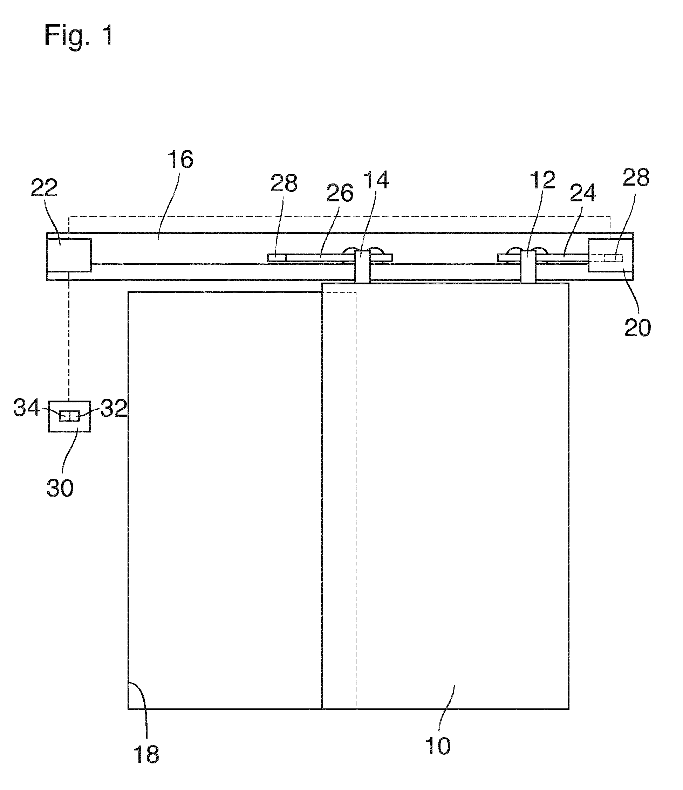

Fig. 1 zeigt eine Tür 10, in diesem Beispiel eine Schiebetür, die mit Rollwagen 12, 14 an einer Laufschiene 16 aufgehängt und geführt ist, so dass sie sich relativ zu einer Türöffnung 18 bewegen lässt.

An dem in Fig. 1 rechten Ende der Laufschiene 16 ist eine stationäre Antriebseinheit 20 angeordnet, die als Türöffner betrieben werden kann. Am entgegengesetzten Ende der Laufschiene 16 ist eine stationäre Antriebseinheit 22 angeordnet, die als Türschließer betrieben werden kann.

Die stationären Antriebseinheiten 20, 22 weisen jeweils mindestens einen Elektromagneten auf, wie später noch näher beschrieben werden wird.

An jedem der Rollwagen 14 ist eine türfeste Antriebseinheit 24 bzw. 26 angeordnet, die in diesem Beispiel die Form eines Fortsatzes hat, der von dem Rollwagen in Richtung auf die zugehörige Antriebseinheit vorspringt und am freien Ende einen Magneten 28 (Permanentmagneten) trägt, der beispielsweise aus einer Neodymlegierung besteht.

Die stationären (aktiven) Antriebseinheiten 20, 22 sind über Leitungen (in Fig. 1 gestrichelt eingezeichnet) mit einer elektronischen Steuereinheit 30 verbunden, die im gezeigten Beispiel in einem Schaltergehäuse untergebracht ist, das in geeigneter Position am Rand der Türöffnung 18 angeordnet ist und Tastschalter 32 und 34 aufweist, mit denen Befehle zum Schließen und zum Öffnen der Tür 10 gegeben werden können. Wahlweise kann die Steuereinheit 30 selbstverständlich auch an anderer Stelle installiert oder in eine der Antriebseinheiten 20, 22 integriert sein.

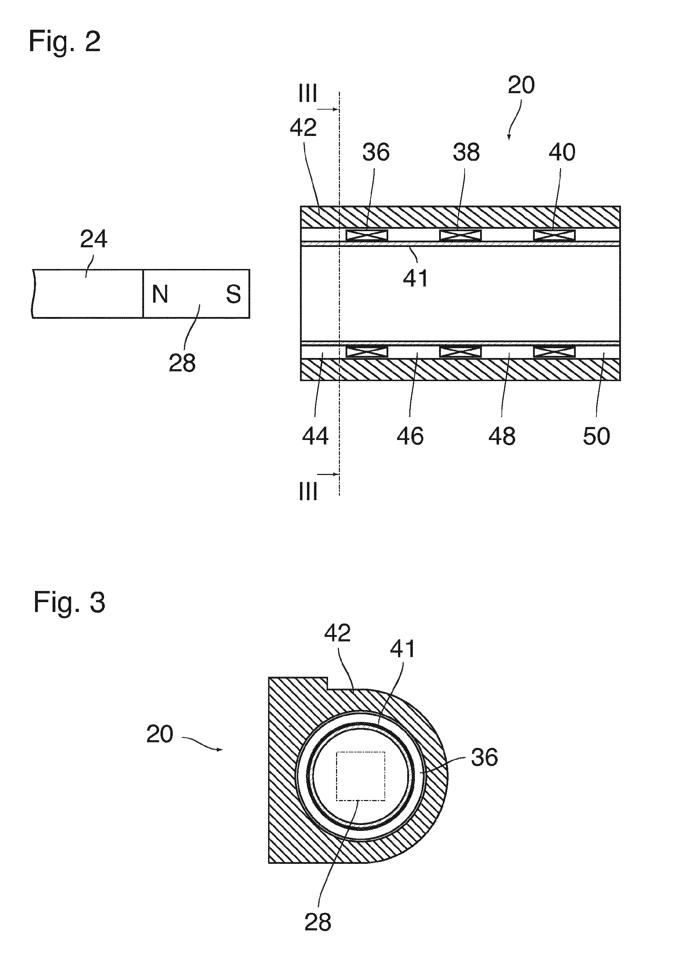

Fig. 2 zeigt ein Beispiel für eine mögliche Gestaltung der Antriebseinheit 20. Diese Antriebseinheit ist fest an oder in der Laufschiene 16 oder an einer Wand angeordnet, an der die Laufschiene befestigt ist, und weist Elektromagnete in der Form von drei Spulen 36, 38, 40 auf, die in Abstand zueinander auf einem nichtmagnetischen Trägerrohr 41 angeordnet und außen von einem rohrförmigen Joch 42 umgeben sind. Das Trägerrohr 41 erstreckt sich parallel zu der Laufschiene 16 und damit parallel zur Bewegungsrichtung der Tür 10 und bildet einen Kanal, in den die türfeste Antriebseinheit 24 eintauchen kann. Das Joch 42 hat einen Außenquerschnitt (Fig 3), der für den Einbau in die Laufschiene 16 ausgebildet ist. Vor, zwischen und hinter den Spulen 36 - 40 werden gemäß Fig. 2 vier Zonen 44, 46, 48, 50 gebildet, in denen eine magnetische Wechselwirkung zwischen den Spulen und dem Magneten 28 stattfindet.

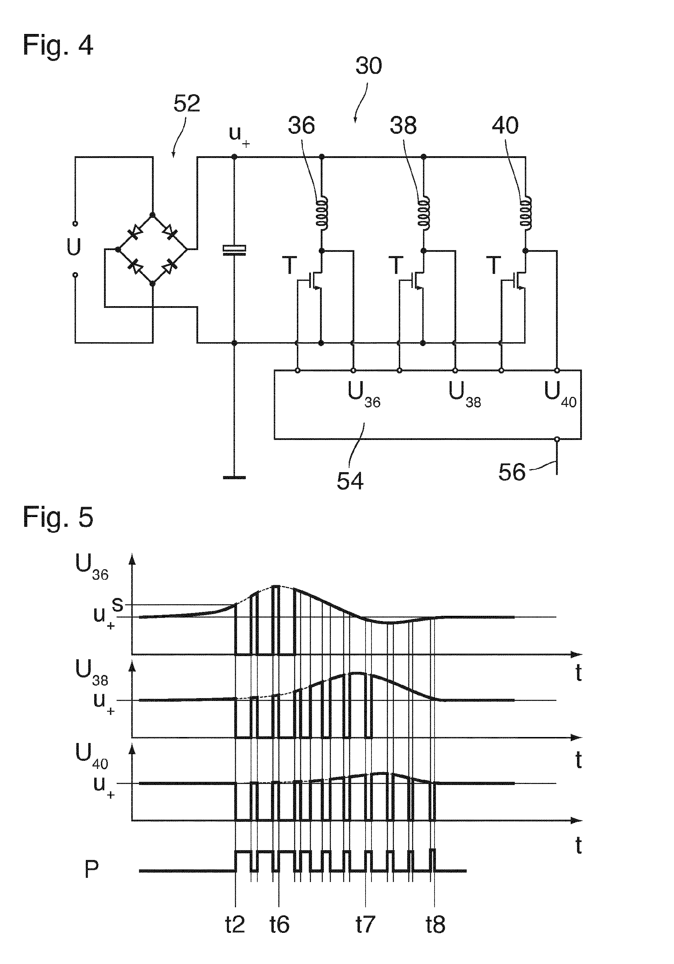

Fig. 4 zeigt ein vereinfachtes Schaltbild einer möglichen Ausführungsform der Steuereinheit 30 in Verbindung mit den Spulen 36 - 40.

Ein Netzteil 52 dient dazu, eine Netzwechselspannung U in eine Gleichspannung u₊ umzuwandeln, mit der die Spulen 36 - 40 gespeist werden. Wahlweise kann das Netzteil auch einen nicht gezeigten Transformator enthalten, mit dem die Netzwechselspannung auf eine niedrigere Spannung herunter transformiert wird.

Die Spulen 36 - 40 sind parallel zueinander zwischen u₊ und Masse geschaltet. Jeder der parallelen Äste der Schaltung enthält einen Transistor T, der durch einen entsprechenden Ausgang eines Prozessors 54 gesteuert wird und es erlaubt, den Stromfluss durch die betreffende Spule zu ermöglichen oder zu unterbrechen. Auf diese Weise lassen sich die Spulen so aktivieren, dass sie eine abstoßende Kraft auf den Magneten 28 ausüben und so der Tür 10 einen Kraftstoß in Schließrichtung (nach links in Fig. 1) erteilen.

Die Antriebseinheit 22 am entgegengesetzten Ende kann spiegelbildlich zu der Antriebseinheit 20 aufgebaut sein, und ihre Spulen werden durch eine in der Steuereinheit 30 enthaltene, jedoch nicht gezeigte Schaltung gesteuert, die der in Fig. 4 gezeigten Schaltung für die Antriebseinheit 20 analog ist.

Wenn der Tastschalter 32 betätigt und die Tür 10 durch die Antriebseinheit 20 in Schließrichtung angestoßen wurde, bewegt sie sich aufgrund ihrer Massenträgheit in die Schließstellung (links in Fig. 1). Wenn sie die dortige Endlage erreicht, kann die Antriebseinheit 22 als Dämpfer betrieben werden, mit dem der Aufprall der Tür gedämpft wird.

Wenn der Tastschalter 34 betätigt wird, um die Tür wieder zu öffnen, erhält die Tür über die Antriebseinheiten 22 und 26 einen Kraftstoß, der sie wieder in die Öffnungsstellung überführt, wo dann die Antriebseinheit 20 als Dämpfer arbeitet.

Die Funktionsweise der Antriebseinheit 20 als Dämpfer soll nachstehend anhand der Fig. 4 und 5 erläutert werden. Das elektrische Potential an einem Punkt zwischen der Spule 36, 38, 40 und dem zugehörigen Transistor T wird abgegriffen und an einem entsprechenden Eingang des Prozessors 54 als Spannung U₃₆, U₃₈ bzw. U₄₀ gemessen. Als Beispiel soll angenommen werden, dass sich die Tür nach rechts in ihre vollständig geöffnete Stellung bewegt, so dass die türfeste Antriebseinheit 24 von links nach rechts in die in Fig. 2 gezeigte stationäre Antriebseinheit 20 eintaucht. Der Magnet 28 ist so gepolt, dass sein Südpol S der Antriebseinheit 20 zugewandt ist. Sämtliche Spulen 36 - 40 sind zunächst abgeschaltet. Die Annäherung des Magneten 28 an die Zone 44 bewirkt eine Änderung des magnetischen Flusses durch die Spulen, wodurch in den Spulen die Spannungen U₃₆, U₃₈ und U₄₀ induziert werden.

Die zeitliche Änderung dieser Spannungen ist in Fig. 5 dargestellt. Zum Zeitpunkt t2 erreicht der Magnet 28 die in Fig. 2 gezeigte Position. Wie die obere Kurve in Fig. 5 zeigt, hat die Spannung U₃₆ zu diesem Zeitpunkt einen Schwellenwert s erreicht. Der Prozessor 54 detektiert das Erreichen dieses Schwellenwertes und erkennt daran, dass sich die Tür der Antriebseinheit 20 annähert. Daraufhin werden die Transistoren T für alle drei Spulen mit einem Impulssignal P angesteuert, das in der untersten Kurve in Fig. 5 gezeigt ist. Dementsprechend werden die Spulen mit einem gepulsten Strom erregt, wobei die mittlere Stromstärke durch die Pulsweite des Pulssignals P gegeben ist. Wenn die Transistoren T leitend sind, wird das Potential zwischen dem Transistor und der Spule auf Masse geklemmt, so dass die Spannungen U₃₆ - U₄₀ nicht gemessen werden können. Nur in den Impulspausen sind die induzierten Spannungen wieder messbar.

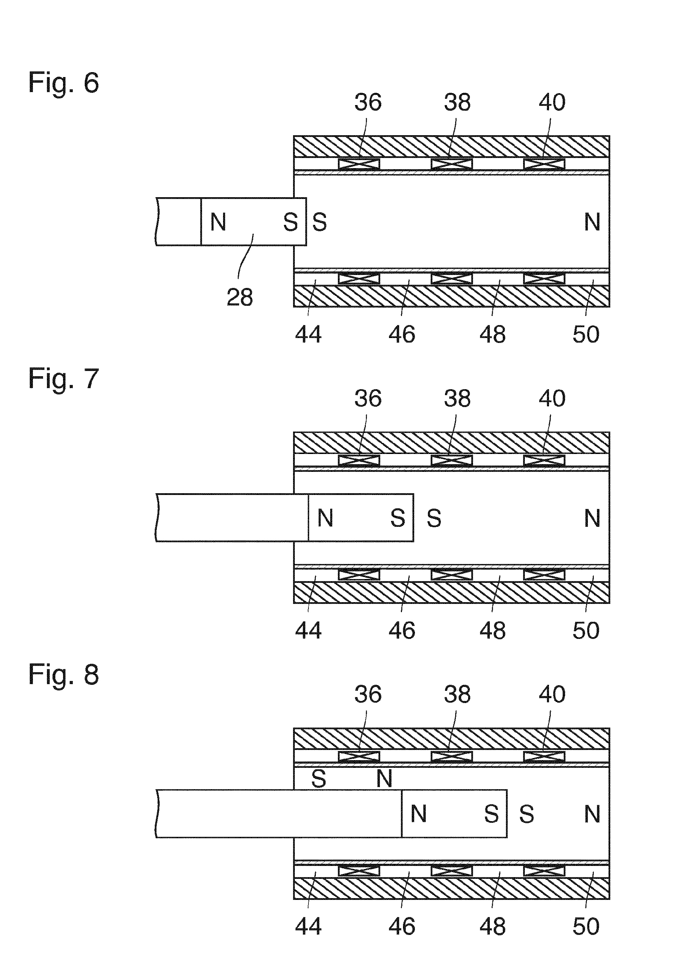

Zum Zeitpunkt t6 erreicht der Südpol des Magneten 28 die Zone 44, wie in Fig. 6 gezeigt ist. In diesem Moment erreicht die Änderung des magnetischen Flusses durch die Spule 36 und damit die induzierte Spannung U₃₆ ein Maximum. Anhand dieses Maximums (detektierbar in der nächsten Impulspause) erkennt der Prozessor 54 die aktuelle Position des Magneten 28. Die Höhe des Maximums der Spannung U₃₆ ist von der Änderungsrate des magnetischen Flusses und damit von der Geschwindigkeit der Tür abhängig. Im gezeigten Beispiel ist in dem Prozessor 54 ein Algorithmus implementiert, der anhand der Höhe des Maximums die Geschwindigkeit der Tür abschätzt und den Kraftstoß, der der Tür erteilt werden soll, so berechnet, dass die Tür dann zum Stillstand kommt, wenn sich der Magnet 28 mittig unter der Spule 38 befindet. Wie Fig. 5 zeigt, wird die magnetische Kraft dosiert, indem die Impulsweite des Impulssignals P moduliert wird. Im gezeigten Beispiel wird die Impulsweite auch nach dem Zeitpunkt t6 nicht konstant gehalten, sondern nach und nach verringert, um die Tür sanft in den Stillstand abzubremsen.

Sobald der Prozessor 54 das Maximum der Spannung U₃₆ bei t6 erkannt hat, schaltet er die Spule 36 ab, da diese Spule sonst eine beschleunigende Kraft auf den Magneten 28 ausüben würde. Die Bewegung der Tür wird dann mit den Spulen 38 und 40 weiter abgebremst. Zum Zeitpunkt t7 erreicht der Südpol des Magneten 28 die Zone 46, was anhand eines Nulldurchgangs der in der Spule 36 induzierten Spannung (U₃₆ = u₊) sowie an einem Maximum der Spannung U₃₈ zu erkennen ist. Daraufhin wird auch die Spule 38 abgeschaltet.

Danach nähert sich der Südpol des Magneten 28 der Zone 48, wodurch die Spannung U₄₀ ansteigt. Da jedoch die Geschwindigkeit der Tür auf Null abnimmt, nimmt auch die Spannung U₄₀ wieder ab, bis sie schließlich bei Stillstand der Tür den Wert U₊ erreicht. Das geschieht zum Zeitpunkt t8. Der Magnet 28 befindet sich dann in der in Fig. 8 gezeigten Position mittig unter der Spule 38.

Wenn die Tür ganz zum Stillstand gekommen ist, sind alle drei Spannungen U₃₆ U₃₈ und U₄₀ gleich u₊, und auch die Spule 40 kann abgeschaltet werden. Wahlweise kann ein Anschlag für die Tür 10 so positioniert sein, dass er die Tür genau in dieser Position auch mechanisch anhält. Falls die Tür etwas zurückprallen sollte, kann die Spule 36 vorübergehend aktiviert werden, so dass sie, wie Fig. 8 zeigt, eine abstoßende Kraft auf den Magneten 28 ausübt und so die Tür gegen den Anschlag drückt.

Wenn mit dem Tastschalter 32 ein Befehl zum Öffnen der Tür gegeben wird, so wird zuerst die Spule 40 aktiviert, so dass der Magnet 28 nach links getrieben wird. Dabei können die Spannungen U₃₈ und U₃₆ gemessen werden, so dass zu geeigneten Zeitpunkten die Spulen 38 und 36 zugeschaltet werden können.

Vor Inbetriebnahme wird die Steuereinheit 30 so auf die Masse der Tür 10 und den Rollwiderstand der Rollwagen 12, 14 kalibriert, dass der durch die Impulsweite des Impulssignals P bestimmte Kraftstoß die passende Stärke hat.

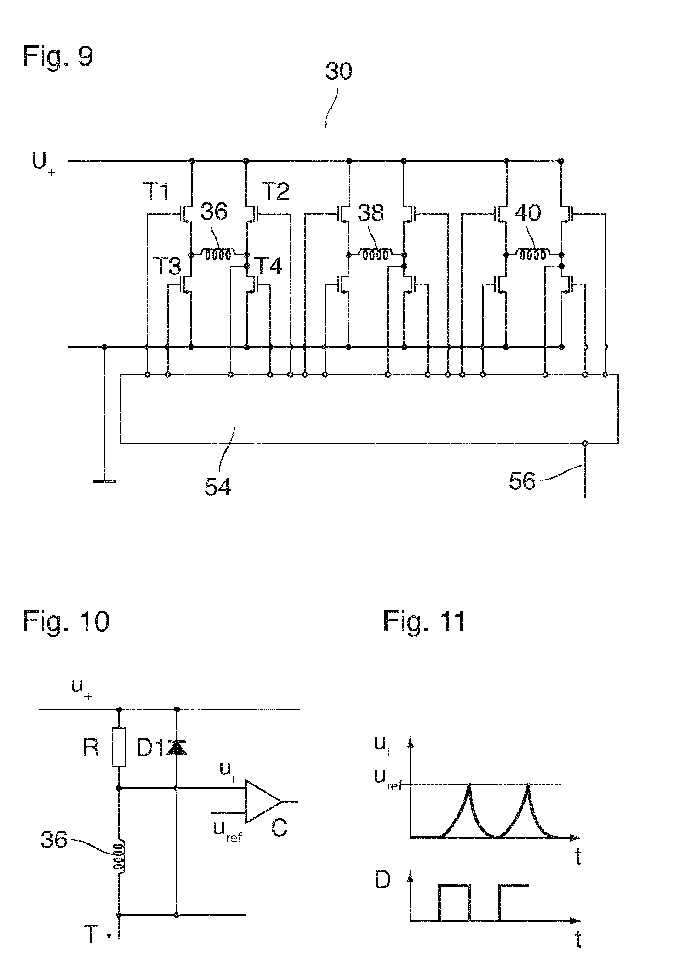

Fig. 9 zeigt eine modifizierte Ausführungsform der Schaltungen für die Antriebseinheiten 20 und 22. Jede der Spulen 36, 38, 40 ist hier in eine Brücke von Transistoren T1, T2, T3 und T4 geschaltet, die durch den Prozessor 54 so angesteuert werden, dass nicht nur eine Pulsweitenmodulation des Stromflusses durch die Spule erfolgt, sondern auch die Stromrichtung und damit die Polung des Elektromagneten umgekehrt werden kann. Beispielsweise fließt der Strom in der Spule 36 in der einen Richtung, wenn die Transistoren T1 und T4 leitend und die Transistoren T2 und T3 gesperrt sind, und er fließt in der entgegengesetzten Richtung, wenn die Transistoren T2 und T3 leitend und die Transistoren T1 und T4 gesperrt sind. In den Impulspausen kann auch hier die in der Spule induzierte Spannung gemessen werden. Dazu wird im gezeigten Beispiel das Potential an dem Punkt zwischen der Spule 36 und dem Transistor T4 abgegriffen. Bei der Messung ist dann der Transistor T1 (oder alternativ der Transistor T3) leitend, während alle übrigen Transistoren gesperrt sind.

Bei dieser Ausführungsform können die Spulen bei der Beschleunigung und Verzögerung der Tür effizienter genutzt werden. Beispielsweise ist es in der Phase zwischen den Zeitpunkten t6 und t7 nicht nötig, die Spule 36 abzuschalten. Stattdessen kann die Polung dieser Spule umgekehrt werden, so dass sie ihrerseits eine bremsende, in Fig. 6 und 7 nach links gerichtete Kraft auf den Magneten 28 ausübt. Entsprechend kann auch die Spule 38 umgepolt werden, während sich der Südpol des Magneten 28 von der Zone 46 zur Zone 48 bewegt.

Weiterhin kann in dieser Ausführungsform die Antriebseinheit auch so betrieben werden, dass die Tür erst in einer Position zum Stillstand kommt, in der sich der Magnet 28 unter der letzten Spule 40 befindet. Vorzugsweise ist dann jedoch der mechanische Anschlag für die Tür so angeordnet, dass, wenn sich die Tür in ihrer Endlage befindet, der Magnet 28 nicht genau mittig unter der Spule 40 liegt, sondern etwas nach links versetzt. Wenn dann die Spule 40 dann mit der richtigen Polung erregt wird (Zone 50 ist Südpol), so ist sichergestellt, dass der Magnet 28 nach links und nicht nach rechts gestoßen wird.

Wahlweise ist es auch möglich, ganz auf mechanische Anschläge für die Tür zu verzichten und die Tür allein durch magnetische Kräfte in ihrer jeweiligen Endlage zu halten. Wenn die Tür in Ruhe ist und keine äußeren Kräfte wirken, können sämtliche Spulen stromlos sein. Wenn dann die Tür durch eine äußere Kraft in Bewegung gesetzt wird so lässt sich dies anhand der in den Spulen induzierten Spannungen detektieren, und die Spulen können vorübergehend erregt werden, um die Tür wieder in ihre Sollposition zurückzustellen.

Ebenso ist es auch möglich, die Tür aktiv in ihre Sollposition zu ziehen, falls die Tür während der antriebslosen Bewegung zwischen den beiden Endlagen durch irgendein Hindernis gehemmt wurde, so dass die Tür die vorgesehene Endlage nicht von selbst erreicht.

Bei den bisher beschriebenen Ausführungsformen wurde die Position der Tür anhand des in den Spulen 36, 38, 40 induzierten Stromes gemessen. Ein alternatives Verfahren zur Positionsmessung besteht darin, die Induktivität dieser Spulen zu messen. Diese Induktivität wird nämlich durch die magnetische Wechselwirkung der Spule mit dem Magneten 28 oder irgendeinem anderen magnetisch wechselwirkenden Objekt, beispielsweise einem nichtmagnetisierten Körper aus ferromagnetischem Material oder auch einem Metallring oder einer kurzgeschlossenen Spule beeinflusst. Beispielsweise nimmt die Induktivität der Spule 36 in charakteristischer Weise zu, wenn sich der Magnet 28 aus der in Fig. 7 gezeigten Position in die in Fig. 8 gezeigte Position bewegt.

Eine Abwandlung der Schaltung der Steuereinrichtung 30, die die Messung der Induktivität erlaubt, ist in Fig. 10 dargestellt. Ein Widerstand R ist in Reihe zwischen u₊ und die Spule 36 geschaltet. Das Potential uᵢ an dem Punkt zwischen dem Widerstand R und der Spule 36, bezogen auf die Spule u₊, repräsentiert deshalb den Spannungsabfall über dem Widerstand R und damit den Strom durch diesen Widerstand und die Spule 36. In einem Vergleicher C wird das Potential uᵢ mit einem Referenzpotential u_{ref} verglichen, das einen bestimmten Schwellenwert für den Stromfluss durch die Spule repräsentiert. Wenn der Strom diesen Schwellenwert erreicht, liefert der Vergleicher ein entsprechendes Signal an den Prozessor 54.

Die Messung der Induktivität erfolgt in den Impulspausen, in denen die Spule 36 eigentlich nicht bestromt wird. Auch in diesen an sich inaktiven Phasen der Spule wird jedoch der zugehörige Transistor T mit einem Treibersignal D angesteuert, das von dem Prozessor 54 geliefert wird und in Fig. 11 dargestellt ist. Zum Zeitpunkt der ansteigenden Flanke des Treibersignals D wird der Transistor T leitend, und der Strom durch die Spule steigt exponentiell mit einer Zeitkonstanten, die zur Induktivität der Spule umgekehrt proportional ist. Der entsprechende Anstieg der Spannung uᵢ ist in Fig. 11 in Diagrammform dargestellt. Die Referenzspannung u_{ref} ist so gewählt, dass sie einer relativ kleinen Stromstärke von z. B. 100 mA entspricht, im Vergleich zu etwa 10 A bei Aktivierung der Spule. Wenn die Spannung die uᵢ diese Referenzspannung erreicht, wird der Transistor wieder gesperrt (abfallende Flanke des Treibersignals D). Eine Diode D1 (Fig. 10) erlaubt jedoch einen fortgesetzten Stromfluss durch die Spule 36. Dieser Strom klingt mit der durch die Induktivität bestimmten Zeitkonstanten exponentiell auf null ab. Die Referenzspannung u_{ref} wird vom Prozessor 54 auf einen Wert nahe null geändert, und wenn uᵢ diesen Wert erreicht hat, beginnt ein neuer Impuls des Treibersignals D, so dass der Transistor T aufgesteuert wird ein neuer Zyklus beginnt. Die Frequenz des auf diese Weise erzeugten Treibersignals D ist dann ein Maß für die Induktivität der Spule 36. Je höher die Frequenz ist, desto kleiner ist die Induktivität der Spule.

Auf entsprechende Weise können auch die Induktivitäten der übrigen Spulen 38, 40 gemessen werden.

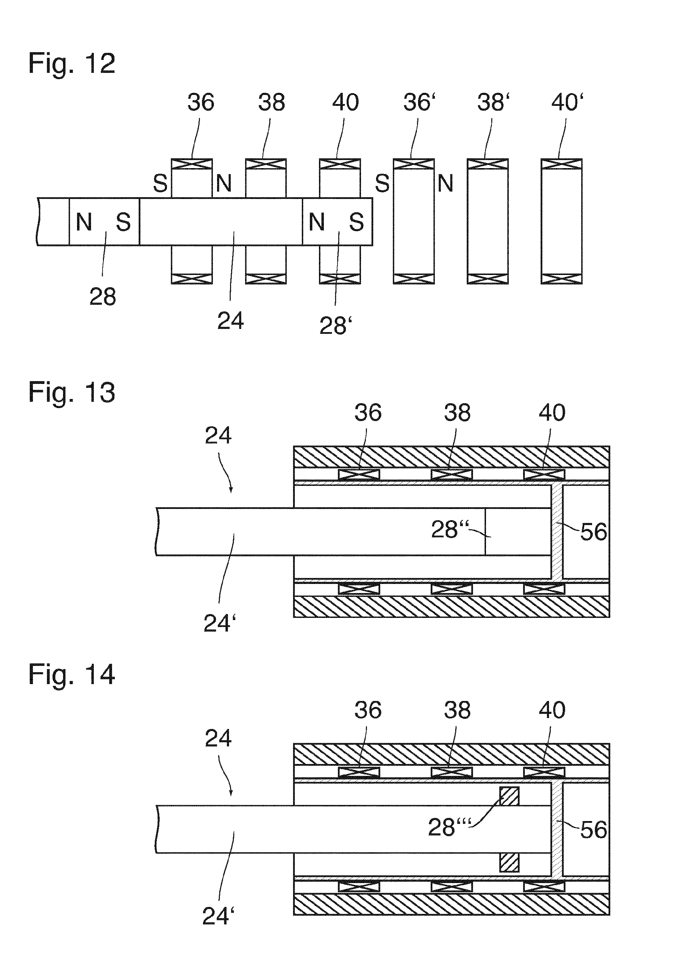

Fig. 12 zeigt eine abgewandelte Ausführungsform der Antriebseinheiten 20 und 24. Die aktive, stationäre Antriebseinheit 20 besteht in diesem Beispiel aus einer Kaskade aus sechs Spulen 36-40, 36'-40', die in gleichmäßigen axialen Abständen angeordnet sind. Die Spule 36 und die hinter der Spule 40 liegende Spule 36' bilden dabei ein Paar von Spulen, die so in Reihe geschaltet sind, dass sie im aktiven Zustand gleichsinnig von Strom durchflossen werden. Entsprechendes gilt für die Spulenpaare 38, 38' und 40, 40'. Die türfeste Antriebseinheit 24 weist in diesem Beispiel zwei Magnete (Permanentmagnete) 28, 28' auf, deren Abstand dem Abstand zwischen den Spulen jedes Paares entspricht.

Die Funktionsweise entspricht derjenigen in Fig. 6 bis 8, jedoch mit dem Unterschied, dass in jedem Zustand die doppelte magnetische Kraft zur Verfügung steht

Fig. 13 zeigt ein weiteres Ausführungsbeispiel, bei dem die aktive Antriebseinheit wieder nur drei Spulen 36, 38, 40 aufweist. Die türfeste Antriebseinheit 24' weist in diesem Beispiel anstelle eines Permanentmagneten lediglich einen nicht magnetisierten Körper 28" aus ferromagnetischem Material auf, der an einem nichtmagnetisierbaren Trägerkörper 24' gehalten ist. Die magnetische Wechselwirkung zwischen den Spulen 36-40 und dem Körper 28" besteht somit stetes in einer anziehenden Kraft. Die Position der Tür kann in der oben beschriebenen Weise anhand der Induktivitäten der Spulen 36-40 gemessen werden. Wenn die Tür aus der in Fig. 13 gezeigten Position heraus einen Kraftstoß nach links erhalten soll, so werden nacheinander die Spulen 38 und 36 aktiviert. Wenn eine nach rechts gerichtete Bewegung der Tür gedämpft werden soll, werden diese Spulen 36, 38 in der umgekehrten Reihenfolge aktiviert und zwar jeweils dann, wenn der Körper 28" die Spule passiert hat. Erforderlichenfalls kann schließlich die Spule 40 aktiviert werden, um die Tür aktiv in eine durch einen Anschlag 56 definierte Position zu ziehen und/oder sie in dieser Position zu halten.

Fig. 14 zeigt ein weiteres Ausführungsbeispiel, das sich von dem Ausführungsbeispiel nach Fig. 13 dadurch unterscheidet, dass anstelle des ferromagetischen Körpers 28" ein geschlossener Metallring 28'" (oder wahlweise eine kurzgeschlossene Spule) vorgesehen ist, in dem bei Aktivierung einer der Spulen 36, 38, 40 ein Strom induziert wird. Der induzierte Strom erzeugt wiederum ein Magnetfeld, das eine abstoßende magnetische Wechselwirkung mit den Feldern der Spulen 36-40 bewirkt. Um der Tür aus der in Fig. 14 gezeigten Position heraus einen Kraftstoß nach links zu erteilen, werden nacheinander die Spulen 40, 38 und 36 aktiviert. Beim Dämpfen einer nach rechts gerichteten Bewegung werden die Spulen wieder in umgekehrter Reihenfolge aktiviert, jetzt jedoch jeweils zu dem Zeitpunkt, bevor der Metallring 28"' die entsprechende Spule erreicht hat. Um die Tür gegen den Anschlag 56 zu drücken, kann in diesem Fall die Spule 38 aktiviert werden.

## Patentansprüche

1. Elektromagnetischer Türantrieb mit mindestens einem Paar aus einer stationären Antriebseinheit (20, 22) und einer türfesten Antriebseinheit (24, 26), die dazu eingerichtet sind, miteinender in magnetische Wechselwirkung zu treten, wobei mindestens eine dieser Antriebseinheiten mindestens einen Elektromagneten aufweist, **dadurch gekennzeichnet, dass** die Antriebseinheiten (20, 22, 24, 26) derart angeordnet sind, dass sie nur dann innerhalb der Reichweite ihrer gegenseitigen magnetischen Wechselwirkung liegen, wenn sich die Tür (10) im Bereich eines Endes ihres Bewegungsspiels befindet, dass die Tür derart gelagert ist, dass sie antriebslos über zumindest einen Teil ihres Bewegungsspiels bewegbar ist, und dass eine Steuereinheit (30) für den Elektromagneten dazu ausgebildet ist, der Tür (10) durch die magnetische Wechselwirkung einen Kraftstoß zu erteilen.

2. Türantrieb nach Anspruch 1, bei dem die stationäre Antriebseinheit (20, 22) im Bereich eines Endes einer Laufschiene (16) für eine Schiebetür angeordnet ist.

3. Türantrieb nach Anspruch 1 oder 2, bei dem mindestens eine Antriebseinheit (24, 26) mindestens einen Körper (28, 28'; 28") aus ferromagnetischem Material aufweist.

4. Türantrieb nach Anspruch 3, bei dem der mindestens eine Körper (28, 28') aus ferromagnetischem Material ein Permanentmagnet ist.

5. Türantrieb nach Anspruch 4, bei dem die Steuereinheit (30) dazu ausgebildet ist, anhand einer durch die Bewegung des Permanentmagneten (28) relativ zu der Antriebseinheit (20, 22) in einer Spule (36, 38, 40) dieser Antriebseinheit induzierten Spannung die Position und/oder Geschwindigkeit der Tür (10) zu detektieren.

6. Türantrieb nach Anspruch 1 oder 2, bei dem mindestens eine Antriebseinheit (24, 26) mindestens einen ringförmigen, kurzgeschlossenen elektrischen Leiter (28"') aufweist.

7. Türantrieb nach einem der vorstehenden Ansprüche, bei dem die Steuereinheit (30) dazu ausgebildet ist, die Induktivität einer Spule (36, 38, 40) zu messen, die den mindestens einen Elektromagneten der mindestens einen Antriebseinheit bildet, und die Position der Tür (10) anhand der gemessenen Induktivität zu detektieren, die von der Position der mit dieser Spule magnetisch wechselwirkenden Antriebseinheit abhängig ist.

8. Türantrieb nach einem der vorstehenden Ansprüche, bei dem die Steuereinheit (30) dazu eingerichtet ist, die Antriebseinheit (22), die den Elektromagneten aufweist, als Dämpfer oder Einzug zu betreiben, der die Bewegung der Tür (10) bei Erreichen ihrer Endlage dämpft und/oder die Tür (10) aktiv in die Endlage zieht.

9. Türantrieb nach einem der vorstehenden Ansprüche, bei dem die mindestens eine Antriebseinheit (20, 22) eine Kaskade aus mehreren Spulen (36, 38, 40) aufweist.

10. Türantrieb nach Anspruch 9, bei dem die Steuereinheit (30) dazu eingerichtet ist, verschiedene Positionen der Tür (10) zu detektieren und die Spulen (36, 38, 40) abhängig vom Detektionsergebnis zu erregen und/oder abzuschalten.

11. Türantrieb nach Anspruch 9 oder 10, bei dem die Kaskade mindestens einePaar (36, 36'; 38, 38'; 40, 40') von in Abstand zueinander angeordneten und elektrisch in Reihe geschalteten Spulen aufweist und die andere Antriebseinheit zwei Permanentmagnete (28, 28') aufweist, deren Abstand dem Abstand zwischen den Spulen des Paares entspricht.
